# EUROPÄISCHE PATENTSCHRIFT

(11) **EP 0 936 451 B1**
(45) Veröffentlichungstag und Bekanntmachung des Hinweises auf die Patenterteilung: **31.10.2001**
(21) Anmeldenummer: 99101955.5
(22) Anmeldetag: 30.01.1999
(51) Int. Cl.: G01F 17/00, G01N 9/02

(54) **Vorrichtung zur Ermittlung des Volumens eines keramischen Probenkörpers**
Device for determining the volume of a ceramic test piece
Dispositif de détermination du volume d'un échantillon en céramique

(30) Priorität: 10.02.1998 DE 19805236
(43) Veröffentlichungstag der Anmeldung: 18.08.1999
(73) Patentinhaber: Euroditan S.L., 12080 Castellon (ES)
(72) Erfinder: Engmann, Dietrich, 52134 Herzogenrath (DE)
(74) Vertreter: Biermann, Wilhelm, Dr.-Ing.

(56) Entgegenhaltungen:
- EP-A- 0 720 011
- DE-A- 4 238 684
- DE-A- 4 408 053
- JP-A- 62 269 040
- US-A- 4 083 228
- US-A- 4 095 473
- US-A- 5 493 898
- CHERN M Y ET AL: "Small, inexpensive apparatus for the determination of the density of powdered materials" REVIEW OF SCIENTIFIC INSTRUMENTS, Bd. 61, Nr. 6, 1. Juni 1990, Seiten 1733-1735, XP000166158 ISSN 0034-6748

## Beschreibung

Die Erfindung betrifft eine Vorrichtung zur Ermittlung des Volumens eines porösen keramischen Probenkörpers durch Messung des in einer geschlossenen Meßkammer nach Einbringen des Probenkörpers sich ergebenden Druckanstiegs, mit einer Meßkammer, einer mit der Meßkammer verbundenen Druckmeßeinrichtung, einem von der Druckmeßeinrichtung angesteuerten Rechner zum Errechnen des Volumens des Probenkörpers aus dem gemessenen Druckanstieg, sowie mit einer in der Meßkammer angeordneten flexiblen Folie, die sich unter der Wirkung des Überdrucks in der Meßkammer dicht an die Oberfläche des Körpers anlegt.

*Eine Vorrichtung dieser Art ist aus der DE-A-4408053 bekannt*. *Um das Eindringen des Gases in den Körper zu verhindern, was zu Ungenauigkeiten bei der Dichteermittlung führen würde, ist bei dieser bekannten Vorrichtung in der Kammer eine heb- und senkbare flexible Folie angeordnet*, *die im Anschluß an die Positionierung des Körpers um diesen gehüllt wird und sich an die Außenkontur des Körpers anlegt. Die Manipulation der flexiblen Folie innerhalb der Kammer erfordert jedoch zusätzliche mechanische Vorrichtungen*. *Außerdem kann der Körper nur auf den freiliegenden Oberflächen mit der Folie umhüllt werden, nicht dagegen auf der unteren Oberfläche*, *mit der der Körper auf der Trägerplatte aufliegt*.

*Eine andere gaspyknometrische Vorrichtung zur Ermittlung des Volumens von beliebigen Probekörpern, beispielsweise auch von porösen Körpern aus Sintermaterialien oder von körnigen Pulvern, ist in der US-A-4083228 beschrieben. Diese Vorrichtung umfaßt* *zwei gleich große*, *jeweils mit einem Druckkolben versehene zylindrische Kammern*, *nämlich eine die Probe aufnehmende Meßkammer und eine Vergleichskammer*. *Mit Hilfe der Druckkolben, die mechanisch miteinander gekoppelt sind, wird das Volumen beider Kammern um das gleiche Maß verringert, wobei der Druck in der den Probenkörper enthaltenden Meßkammer stärker ansteigt als in der Vergleichskammer*. *Dann wird ein in die Meßkammer hineinragender Kompensationskolben mit Hilfe einer Mikrometerschraube so weit aus der Meßkammer herausgezogen, bis beide Kammern den gleichen Druck aufweisen. Das Volumen des aus der Meßkammer herausgezogenen Teils des Kompensationskolbens*, *das an der Mikrometerschraube abgelesen werden kann, gibt unmittelbar das Volumen des Probenkörpers an*. *Zur Bestimmung des Volumens eines porösen Probenkörpers kann dieser mit einer Membran umhüllt werden*.

*In der Zeitschrift REVIEW OF SCIENTIFIC INSTRUMENTS*, *Juni 1990, Bd*.*61*, *Seiten 1733-1735 ist ein Gaspyknometer für die Bestimmung des Volumens pulverförmiger Materialien beschrieben*, *das sich für Laborzwecke eignet. Bei dieser Vorrichtung wird in den Probenraum ein definiertes Gasvolumen eingeleitet. Die Druckerhöhung, die sich bei Gegenwart des Probenmaterials ergibt, wird zur Bestimmung des Volumens wiederum nach der allgemeinen Gasgleichung ausgewertet*.

*Zur Bestimmung des spezifischen Gewichts eines porösen Körpers ist es aus der JP-A-62269040 bekannt, vor der Messung des Volumens des Körpers mit Hilfe der Wasserverdrängung den porösen Körper zunächst in einer Vakuumkammer mit einer wasserundurchlässigen Folie dicht zu umgeben.*

Aus der DE 4238684 A1 ist ein Gaspyknometer bekannt, bei dem ein verschiebbarer Kolben in dem Pyknometer eine Änderung des Gasdrucks hervorruft, und bei dem durch einen Differenzdrucksensor der Differenzdruck zwischen der Meßkammer und einem äußeren Gasdruck gemessen, bei einem bestimmten Differenzdruckwert der Verschiebevorgang des Kolbens beendet, und aus dem zurückgelegten Weg des Kolbens das Volumen des Körpers bestimmt wird.

Bei der Herstellung von keramischen Körpern, insbesondere bei der Herstellung von keramischen Fliesen, ist die Kenntnis der Verteilung der Dichte über der gesamten Fläche der Fliesen von großer Bedeutung; eine gleichmäßige Dichte ist nämlich eine wesentliche Voraussetzung für die Qualität des Produkts. Bei modernen Fertigungsprozessen wird deshalb immer mehr dazu übergegangen, an den keramischen Rohlingen, das heißt nach dem Pressen der Rohlinge, die Dichteverteilung in den Rohlingen systematisch zu kontrollieren und in Abhängigkeit von den Meßergebnissen den Füllvorgang der Preßformen zu steuern. Dabei ist es allgemein üblich, bei keramischen Probekörpern zur Bestimmung des Volumens den Auftrieb des Probekörpers in Quecksilber zu messen. Moderne Vorrichtungen zum Messen der Auftriebskraft von keramischen Probenkörpern in Quecksilber sind beispielsweise aus der italienischen Patentschrift 1.219.039 und der DE 44 19 960 C2 bekannt. Die bekannten Verfahren zur Bestimmung der Dichte unter Messung der Auftriebskraft in Quecksilber führen in der Praxis zu guten Ergebnissen. Sie erfordern jedoch die Einhaltung strenger Arbeitsvorschriften, da Quecksilber ein toxischer Stoff ist, der bei unsachgemäßem Umgang gesundheitsschädliche Auswirkungen haben kann.

*Dieser bei Verwendung von Quecksilber bekannte Nachteil läßt sich vermeiden, wenn stattdessen die Bestimmung des Volumens nach dem Meßprinzip der Gasverdrängung erfolgt.*

Der Erfindung liegt deshalb die Aufgabe zugrunde, eine *nach dem Prinzip der Gasverdrängung arbeitende Vorrichtung zu entwickeln, die* eine schnelle und hinreichend genaue Bestimmung des Volumens des Probenkörpers ermöglicht.

Gemäß der Erfindung wird diese Aufgabe *bei einer Vorrichtung mit den Merkmalen des Oberbegriffs des Anspruchs 1 dadurch gelöst,* daß die Meßkammer aus zwei Halbkammern besteht, die jeweils durch eine Membran abgeschlossen sind, zwischen die in geöffnetem Zustand der Meßkammer der Probenkörper einbringbar ist, wobei wenigstens eine der Membranen aus einer gummielastischen dehnbaren Folie besteht.

*Da* die dichte Umhüllung der Probenkörper durch *wenigstens eine gummie*lastische Membran gebildet wird, die sich unter dem Überdruck innerhalb der Meßkammer dicht an den Probenkörper anlegen, wird zweckmäßigerweise der Raum zwischen dem Probenkörper und den Membranen während des Meßvorgangs belüftet, das heißt mit der Außenatmosphäre verbunden. Auf diese Weise wird verhindert, daß sich zwischen dem Probenkörper und den Membranen Luftblasen oder zwickelförmige Hohlräume mit eingeschlossener Luft bilden, die zu einer Verfälschung des Meßergebnisses führen können.

Ausführungsbeispiele für die erfindungsgemäße Vorrichtung werden nachfolgend anhand der Zeichnungen näher beschrieben.

Von den Zeichnungen zeigt in schematischen Darstellungen
- Fig.1: eine Meßkammer *aus zwei Halbkammern, die jeweils an der Dichtebene mit einer gummielastischen Membran versehen sind;*
- Fig.2: eine Meßkammer mit einer Anordnung zur Erneuerung der Membranen nach Verschleiß;
- Fig.3: eine Meßkammer mit Membranen und Diffusorblechen zum Entlüften des Raums zwischen den Membranen;
- Fig.4: die in Fig.3 dargestellte Meßkammer in geschlossener Anordnung nach Aufbringen des Meßdrucks, und
- Fig. 5: eine *die* Meßkammer, eine Druckkammer *und die Auswerteeinrichtungen* umfassende *Anordnung* in einer schematischen Gesamtdarstellung.

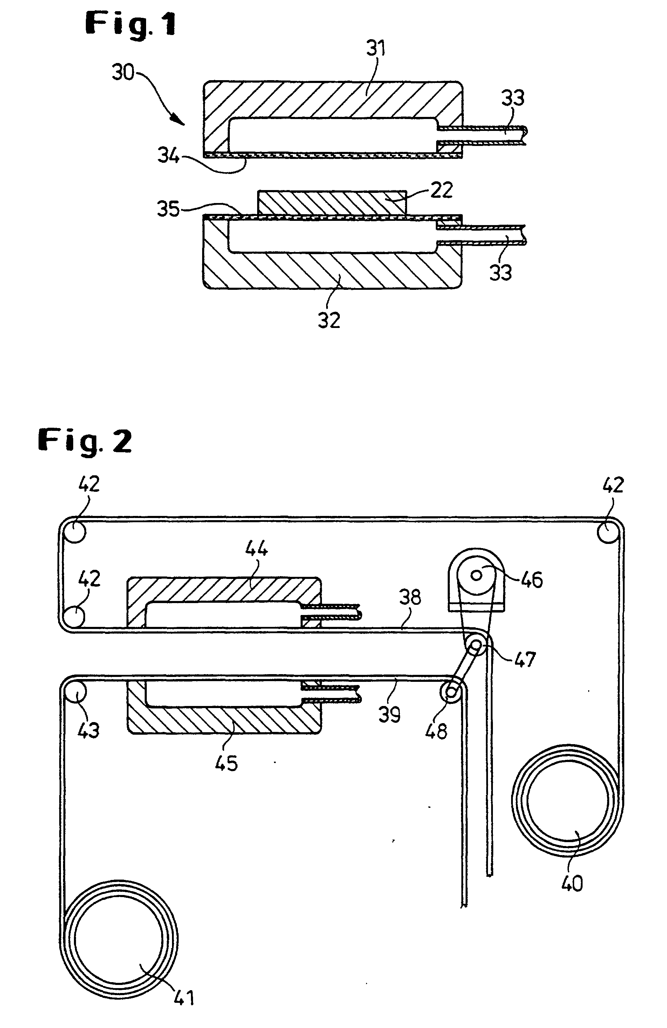

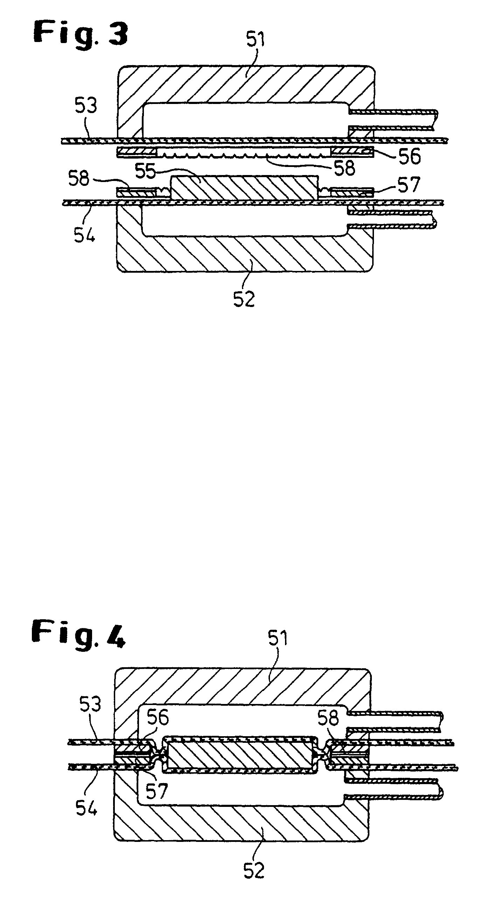

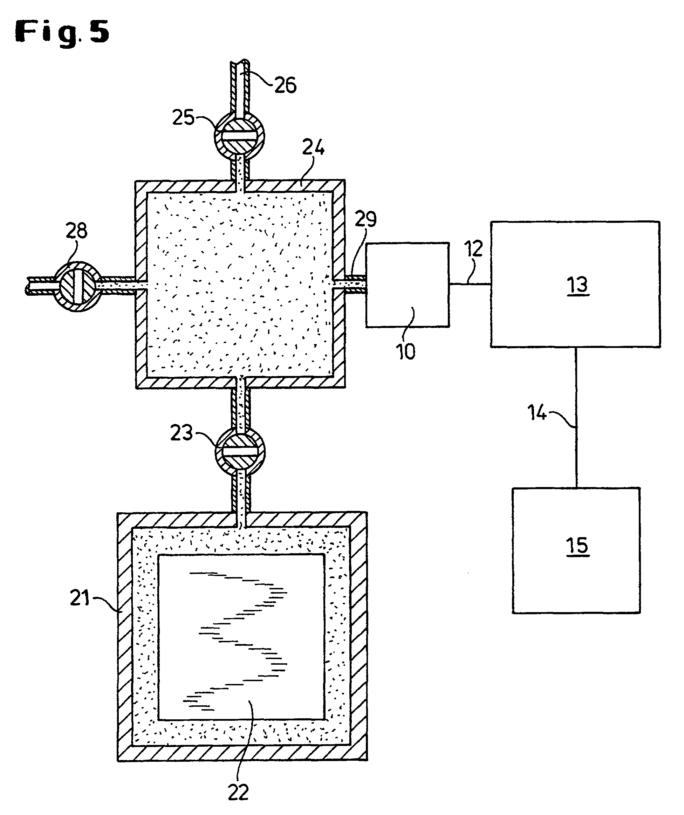

Fig.1 zeigt den grundsätzlichen Aufbau einer Meßkammer 30, die für die Volumenbestimmung eines porösen Körpers vorgesehen ist. Die Meßkammer, die hier in geöffneter Stellung dargestellt ist, besteht aus zwei Schalen *oder Halbkammern* 31,32. Jede Schale 31,32 ist mit einem Anschlußstutzen 33 versehen, die gemeinsam zu der Leitung führen, über die die Druckluft in die Meßkammer eingeleitet wird. Jede Schale weist an der Dichtebene, an der die beiden Schalen zu der Meßkammer zusammengesetzt werden, eine die Schale überspannende dünne gummielastische Membran 34,35 auf. Im geöffneten Zustand der Meßkammer wird der Probenkörper 22 auf die Membran 35 aufgelegt, und die Meßkammer wird geschlossen. Wenn nun die Druckluft in die beiden Halbräume der Meßkammer eingeleitet wird, dehnen sich unter der Wirkung des Gasdrucks die Membranen und legen sich dicht an die Oberfläche des Probenkörpers an. Vorhandene Lufteinschlüsse zwischen den Membranen und dem Probenkörper werden durch den Druck in die Poren des Probenkörpers gepreßt und/oder, wie anhand der Fig.3 und 4 noch erläutert wird, aus dem Zwischenraum zwischen dem Probenköper und den Membranen abgeführt, so daß sie für die Bestimmung des Volumens nicht stören.

Da die gummielastischen Membranen insbesondere dann, wenn sie mit scharfkantigen keramischen Rohlingen in Kontakt kommen, einem Verschleiß unterliegen, sieht die in Fig.2 in ihrem prinzipiellen Aufbau dargestellte Vorrichtung die Möglichkeit einer ständigen Erneuerung der gummielastischen Membran vor. Die gummielastischen Membranen werden in diesem Fall von endlosen Bahnen 38,39 gebildet, die von Vorratsrollen 40,41 abgewickelt und über Umlenkrollen 42,43 derart zwischen den beiden Schalen 44,45 der geöffneten Meßkammer hindurchgeführt werden, daß der Probenkörper 22 im Bereich der Meßkammer zwischen den beiden Bahnen eingelegt werden kann. Wenn das erfolgt ist, werden die beiden Schalen 44,45 zu der geschlossenen Meßkammer zusammengefahren, wobei die Abdichtung der Meßkammer in der Trennebene durch die gummielastische Bahn erfolgen kann. Durch Einleiten der Druckluft in die beiden durch die Schalen 44,45 und die Bahnen 38,39 gebildeten Räume werden die nunmehr als Membranen wirkenden Bahnabschnitte dicht an die Oberfläche des Probenkörpers angepreßt. Nach mehreren Meßvorgängen, wenn die benutzten Abschnitte der Bahnen nicht mehr mit Sicherheit ihre Funktion erfüllen, werden bei geöffneter Meßkammer die beiden Bahnen 38,39 über den Motor 46 und die Transportrollen 47,48 um eine entsprechenden Strecke weitertransportiert, so daß dann die Membranen wieder von neuen, unversehrten Abschnitten der Bahnen 38,39 gebildet werden.

In den Fig.3 und 4 ist eine andere Ausführung einer ebenfalls aus zwei Halbschalen 51,52 bestehenden Meßkammer dargestellt. Während unterhalb der Halbschale 51 eine Gummimembran 53 angeordnet ist, die durch außerhalb der Meßkammer angeordnete Haltevorrichtungen gespannt ist, ist parallel dazu oberhalb der unteren Halbschale 52 eine Gummimembran 54 angeordnet. Auch diese Gummimembran 54 ist durch außerhalb der Meßkammer angeordnete Haltevorrichtungen gespannt. Auf diese Gummimembran 54 wird der Probenkörper 55 aufgelegt. Die nicht dargestellten Haltevorrichtungen für die Gummimembranen 53 und 54 sind mit mechanisch-pneumatischen Vorrichtungen versehen, durch die die Gummimembranen einerseits unter eine gewisse Spannung gesetzt werden, um die Bildung von Falten zu vermeiden. Andererseits gestatten diese Vorrichtungen nach einer bestimmten Anzahl von Messungen eine Verlagerung der Gummimembranen in ihrer Ebene um eine gewisse Strecke, um die Gummimembran an den Druckstellen zu erneuern.

Unter der Gummimembran 53 ist ein ringförmiges Diffusorblech 56, und über der Gummimembran 54 ist ein entsprechendes ringförmiges Diffusorblech 57 angeordnet. Auf ihren einander gegenüberliegenden Flächen sind diese Diffusorbleche mit oberflächlichen rillenförmigen Vertiefungen 58 versehen. Wie aus Fig.4 ersichtlich ist, die diese Meßkammer in geschlossenem Zustand zeigt, sorgen diese Diffusorbleche dafür, daß die zwischen den Gummimembranen und dem Probenkörper insbesondere in den Zwickeln entlang der Umfangskante des Probenkörpers eingeschlossene Luft beim Aufbringen des Meßdrucks durch die Rillen 58 entweicht. Auf diese Weise ist sichergestellt, daß die Gummimembranen beim Meßvorgang auch an den Umfangsflächen der Probenkörper dicht anliegen.

Fig.5 stellt den prinzipiellen Aufbau *einer gesamten Meßanordnung* dar. Zum Füllen der Meßkammer mit dem Gas dient eine Druckkammer 24. Die Meßkammer 21 ist in diesem Fall über ein Ventil 23 mit der Druckkammer 24 verbunden. Die Druckkammer 24 mit dem Volumen V24 kann über ein Ventil 25 an eine Druckluftleitung 26 angeschlossen werden. Ein mit der Druckkammer 24 verbundenes Ventil 28 dient zum Entlüften der Druckkammer. Über eine Leitung 29 ist die Druckkammer mit dem Druckmesser 10 verbunden. Die elektrischen Signale des Druckmessers 10 werden über die Signalleitung 12 dem Rechner 13 zugeführt, der das Ergebnis der rechnerischen Ermittlung über die Signalleitung 14 an den Drucker 15 weiterleitet.

*Mit Hilfe dieser Vorrichtung wird zunächst der sogenannte* *Ausgleichs- oder Vergleichsdruck PA1 ermittelt, das heißt der Gasdruck, der nach Überführung einer definierten Gasmenge in die Meßkammer 21 in dieser herrscht. Hierzu* wird zunächst in der Druckkammer 24 bei geschlossenen Ventilen 23 und 28 ein Überdruck P1 erzeugt, indem das Ventil 25 geöffnet und die Druckkammer an die Druckluftleitung 26 mit dem Luftdruck P1 angeschlossen wird. Sodann wird das Ventil 25 geschlossen und das Ventil 23 geöffnet, das die Druckkammer 24 mit der geschlossenen und leeren Meßkammer 21 verbindet. In den beiden miteinander verbundenen Kammern 21 und 24 stellt sich nun der Ausgleichsdruck PA1 ein. Dieser Ausgleichsdruck PA1 wird vom Druckmesser 10 erfaßt und als Vergleichsdruck im Rechner 13 abgespeichert. Danach werden durch öffnen des Ventils 28 beide Kammern entlüftet. Der abgespeicherte Wert für den Ausgleichsdruck wird bei den folgenden Messungen als Vergleichsdruck zugrundegelegt.

Nach Entlüftung der beiden Kammern über das Ventil 28 werden die Ventile 23 und 28 wieder geschlossen, die Meßkammer 21 geöffnet, der Probenkörper 22 in die Meßkammer gelegt und die Meßkammer wieder dicht verschlossen. Sodann wird durch Öffnnen des Ventils 25 in der Druckkammer 24 der Druck P1 erzeugt. Das Ventil 25 wird dann geschlossen und das Ventil 23 wird geöffnet. In den beiden Kammern stellt sich nun der Ausgleichsdruck PA2 ein. Das diesem Ausgleichsdruck PA2 entsprechende elektrische Signal des Druckmessers 10 wird sodann dem Rechner 13 zugeleitet, der aus den beiden Ausgleichsdrücken PA1 und PA2 sowie den bekannten Volumina der beiden Kammern das Volumen des Probenkörpers 22 errechnet.

Wenn das Volumen der Druckkammer mit V24 und das Volumen der Meßkammer mit V21 bezeichnet wird, dann gilt *bei Anwendung der bekannten allgemeinen Zustandsgleichung für Gase unter der* Annahme, daß die *Anzahl der Gasmoleküle und die* Temperatur konstant bleiben, die folgende Beziehung: PA1 x (V24 + V21) = PA2 x (V24 + V21 - V). Die beiden Volumina V24 und V21 verändern sich nicht und können daher zu VK zusammengefaßt werden. Das zu ermittelnde Volumen des Probenkörpers errechnet sich damit zu V = VK - (VK x PA1/PA2).

Selbstverständlich ist es nicht erforderlich, vor jedem Meßvorgang erneut den Vergleichsdruck zu messen. Vielmehr kann der abgespeicherte wert für den Vergleichsdruck allen nachfolgenden Messungen zugrundegelegt werden, solange die Umgebungsbedingungen wie Temperatur und Atmosphärendruck im wesentlichen unverändert bleiben.

## Patentansprüche

1. Vorrichtung zur *Ermittlung des Volumens eines porösen keramischen Probenkörpers durch Messung des in einer geschlossenen Meßkammer nach Einbringen des Probenkörpers sich ergebenden Druckanstiegs,* mit einer Meßkammer (1), einer mit der Meßkammer (1) verbundenen Druckmeßeinrichtung (10), einem von der Druckmeßeinrichtung (10) angesteuerten Rechner (13) zum Errechnen des Volumens des Probenkörpers (2) aus dem gemessenen Druckanstieg, *sowie mit einer in der Meßkammer angeordneten flexiblen Folie, die sich unter der Wirkung des Überdrucks in der Meßkammer dicht an die Oberfläche des Probenkörpers anlegt,* **dadurch gekennzeichnet, daß** die Meßkammer aus zwei Halbkammern (31,32;44,45) besteht, die jeweils durch eine Membran (34,35;38,39;53,54) abgeschlossen sind, zwischen die in geöffnetem Zustand der Meßkammer der Probenkörper einbringbar ist, wobei wenigstens eine der Membranen (34,35;38,39;53,54) aus einer gummielastischen dehnbaren Folie besteht.

2. Vorrichtung nach Anspruch 1, **dadurch gekennzeichnet, daß** wenigstens eine Membran aus gummielastischem Werkstoff von einem endlosen Folienband (38,39) gebildet wird, das bei geöffneter Meßkammer zwischen den beiden Halbkammern (44,45) in seiner Ebene derart verschiebbar gelagert ist, daß der als Membran wirksame Abschnitt des Folienbandes (38,39) durch Weitertransport des Folienbandes erneuerbar ist.

3. Vorrichtung nach Anspruch 1, **dadurch gekennzeichnet, daß** die gummielastischen Membranen (53,54) außerhalb der Meßkammer (51,52) von mechanisch-pneumatischen Haltevorrichtungen gehalten sind, die eine Verschiebung der Membranen (53,54) in ihrer Ebene gestatten.

4. Vorrichtung nach einem der Ansprüche 1 bis 3, **dadurch gekennzeichnet, daß** zwischen den Membranen (53,54) außerhalb des für den Probenkörper (55) bestimmten Raumes und zwischen den die Meßkammer bildenden Halbschalen (51,52) ein ringförmiger, mit Luftdurchtrittsöffnungen (58) versehener Körper zwischengeschaltet ist.

5. Vorrichtung nach Anspruch 4, **dadurch gekennzeichnet, daß** der mit Luftdurchtrittsöffnungen versehene ringförmige Körper aus zwei Metallblechen (56,57) besteht, die auf ihren im geschlossenen Zustand der Meßkammer aneinanderliegenden Flächen mit rillenartigen Vertiefungen (58) versehen sind.

## Claims

1. Device for ascertaining the volume of a porous ceramic sample body by measurement of the pressure increase resulting in a closed measuring chamber after introduction of the sample body, comprising a measuring chamber (1), a pressure measuring device (10) connected with the measuring chamber (1), a computer (13), which is controlled by the pressure measuring device (10), for calculating the volume of the sample body (2) from the measured pressure increase, and a flexible foil which is arranged in the measuring chamber and which bears sealingly against the surface of the sample body under the action of underpressure in the measuring chamber, **characterised in that** the measuring chamber consists of two half chambers (31, 32; 44, 45) which are each closed by a respective membrane (34, 35; 38, 39; 53, 54), between which the sample body can be introduced in the open state of the measuring chamber, wherein at least one of the membranes (34, 35; 38, 39; 53, 54) consists of a rubber-elastically stretchable foil.

2. Device according to claim 1, **characterised in that** at least one membrane is formed from rubber-elastic material of an endless foil strip (38, 39), which when the measuring chamber is open is displaceably laid between the two half chambers (44, 45) in its plane in such a manner that the portion of the foil strip (38, 39) effective as membrane is renewable by onward transport of the foil strip.

3. Device according to claim 1, **characterised in that** the rubber-elastic membranes (53, 54) are held outside the measuring chamber (52, 52) by mechanical-pneumatic holding devices which allow displacement of the membranes (53, 54) in their plane.

4. Device according to one of claims 1 to 3, **characterised in that** an annular body provided with air passage openings (53) is disposed between the membranes (53, 54) outside the space intended for the sample body (55) and between the half shells (51, 52) forming the measuring chamber.

5. Device according to claim 4, **characterised in that** the annular body provided with air passage openings consists of two sheet metal plates (56, 57) which are provided with groove-like depressions (58) on their surfaces bearing against one another in the closed state of the measuring chamber.

## Revendications

1. Dispositif de détermination du volume d'un échantillon de céramique poreux par mesure de l'augmentation de pression qui se produit dans une chambre de mesure fermée après introduction de l'échantillon, comprenant une chambre de mesure (1), un dispositif de mesure de pression (10) relié à la chambre de mesure (1), un ordinateur (13) commandé par le dispositif de mesure de pression (10) pour calculer le volume de l'échantillon (2) à partir de l'augmentation de pression mesurée, ainsi qu'une feuille flexible agencée dans la chambre de mesure, qui s'applique de manière étanche sur la surface de l'échantillon sous l'action de la surpression dans la chambre de mesure, **caractérisé en ce que** la chambre de mesure est constituée de deux demi-chambres (31, 32; 44, 45), qui sont à chaque fois fermées par une membrane (34, 35; 38, 39; 53, 54), et entre lesquelles, à l'état ouvert de la chambre de mesure, l'échantillon peut être inséré, au moins l'une des membranes (34, 35; 38, 39; 53, 54) étant constituée d'une feuille extensible ayant l'élasticité du caoutchouc.

2. Dispositif selon la revendication 1, **caractérisé en ce qu'**au moins une membrane constituée d'un matériau élastique comme le caoutchouc est formée d'une bande en feuille sans fin (38, 39), qui, lorsque la chambre de mesure est ouverte, est placée entre les deux demi-chambres (44, 45) de manière à pouvoir se déplacer dans son plan de telle sorte que la section de la bande en feuille (38, 39) qui sert de membrane puisse être renouvelée par défilement de la bande en feuille.

3. Dispositif selon la revendication 1, **caractérisé en ce que** les membranes (53, 54) ayant l'élasticité du caoutchouc sont maintenues à l'extérieur de la chambre de mesure (51, 52) par des dispositifs de retenue mécanico-pneumatiques, qui permettent un déplacement des membranes (53, 54) dans leur plan.

4. Dispositif selon l'une quelconque des revendications 1 à 3, **caractérisé en ce que**, entre les membranes (53, 54), à l'extérieur de l'espace destiné à l'échantillon (55) et entre les demi-coques (51, 52) formant la chambre de mesure, est intercalé un corps annulaire pourvu d'ouvertures de passage d'air (58).

5. Dispositif selon la revendication 4, **caractérisé en ce que** le corps annulaire pourvu d'ouvertures de passage d'air est constitué de deux tôles métalliques (56, 57), qui sont pourvues, sur leurs surfaces limitrophes, à l'état fermé de la chambre de mesure, de creux en forme de rainures (58).
